# EUROPEAN PATENT SPECIFICATION

(11) **EP 4 532 231 B1**
(45) Date of publication and mention of the grant of the patent: **22.04.2026**
(21) Application number: 23730587.5
(22) Date of filing: 16.05.2023
(51) Int. Cl.: B60C 25/05, B60C 25/138

(54) **DEVICE FOR FITTING/REMOVING TIRES**
REIFENWECHSELVORRICHTUNG
DISPOSITIF DE MONTAGE/DÉMONTAGE DE PNEUS

(30) Priority: 24.05.2022 IT 202200010763
(43) Date of publication of application: 09.04.2025
(73) Proprietor: M&b Engineering S.r.l., 42124 Reggio nell' Emilia (RE) (IT)
(72) Inventor: TAROZZI, Cristiano, 42124 Reggio nell'Emilia (RE) (IT)
(74) Representative: Zoli, Filippo
(86) International application number: PCT/IB2023/055027
(87) International publication number: WO 2023/228009

(56) References cited:
- EP-A1- 2 468 541
- EP-A1- 2 949 486
- EP-A2- 1 625 954

## Description

### Technical Field

The present invention relates to a device for fitting/removing tires.

### Background Art

Wheels for vehicles comprise a metal ring, commonly known as a rim, having a substantially cylindrical shape and provided with annular flaps at its ends, commonly known as flanges, on which the beads with which the tire is provided fit by interlocking.

Tire changing machines are known to be used to disassemble the tire from the rim in order to be able to perform, e.g., maintenance and/or replacement jobs of wheel components and, subsequently, to refit the same tire, or a replacement one, onto the rim.

Such machines comprise a base frame for resting on the ground provided with a bedplate on which a spindle is mounted which can be operated in rotation around its own axis (usually vertical) and onto which is fixed, by means of a relative clamping system, the rim on which the job is to be done.

Such tire changing machines comprise devices for fitting/removing tires which are associated with the base frame in a sliding manner, along a vertical axis, so as to move closer to/farther away from the bedplate and, therefore, to/from the rim when it is present.

Such devices generally comprise one or more fitting/removal tools, of the type of a hook, and one or more bead breaking tools.

When fitting the tire onto the rim, the fitting/removal tool is placed between the rim flange and the bead and, by setting the rim in rotation, it makes it easier for the bead on which the tire is being operated to override the flange.

When removing the tire from the rim, the bead breaking tool is fitted between the bead of the tire and the flange of the rim with which it is associated to allow them to move away from each other. Eventually, the fitting/removal tool can be used to fasten the bead and pull it so as to move it away from the rim.

The use of such devices for fitting/removing tires does however have some drawbacks.

First of all, the use of such devices is not always smooth because the tools used and/or their respective work areas are often overlapping or interfering.

This results in obvious discomfort for the operator, as well as in the risk of accidental damage to the rim and/or to the tire on which they are operating.

A device for fitting/removing tires is known from US 9517667, which requires that the fitting/removal tool be movable between a home position, wherein it is moved away from the bead breaking tool, and a position of work, wherein it overlaps the bead breaking tool, by resting thereon.

This conformation makes it particularly uncomfortable to disengage the fitting/removal tool from the tire after the fitting phase.

In addition to the aforementioned drawbacks, making a device having the aforementioned characteristics as well as a tire changing machine incorporating such a device is also particularly complex and costly.

Other devices for fitting/removing tires are known from EP 2468541 A1, EP 1625954 A2 and EP2949486 A1.

### Description of the Invention

The main aim of the present invention is to devise a device for fitting/removing tires which allows simplifying the tire fitting/removal operations compared to the devices of known type.

Within this aim, one object of the present invention is to devise a device wherein the tool which, depending on the operational phase, is not used, does not interfere with the work area of the tool being used from time to time, thus limiting the overlapping and/or interference between the work areas of the tools being used.

Again, another object of the present invention is to devise a device for fitting/removing tires which allows reducing the risk of damage to the tire and/or to the rim on which it is being operated compared to the devices of known type.

Within the scope of this object, the present invention aims to devise a device for fitting/removing tires which allows the contact between the tools and the wheel to be limited to only those phases wherein such tools are actively employed.

Another object of the present invention is to devise a device for fitting/removing tires which allows the aforementioned drawbacks of the prior art to be overcome within the framework of a simple, rational, easy and effective to use as well as affordable solution.

The aforementioned objects are achieved by this device for fitting/removing tires having the characteristics of claim 1.

### Brief Description of the Drawings

Other characteristics and advantages of the present invention will become more apparent from the description of a preferred, but not exclusive, embodiment of a device for fitting/removing tires, illustrated by way of an indicative, yet nonlimiting example, in the accompanying tables of drawings in which:
Figure 1 is an axonometric view of a tire changing machine comprising a device for fitting/removing tires according to the invention;
Figure 2 and Figure 3 are an axonometric view and a side view, respectively, of the device according to the invention wherein the fitting/removal tool is in the configuration of work;
Figure 4 and Figure 5 are an axonometric view and a side view, respectively, of the device according to the invention wherein the fitting/removal tool is in the home configuration;
Figure 6 is an axonometric view of some components of the device according to the invention.

### Embodiments of the Invention

With particular reference to these figures, reference numeral 1 globally denotes a device for fitting/removing tires.

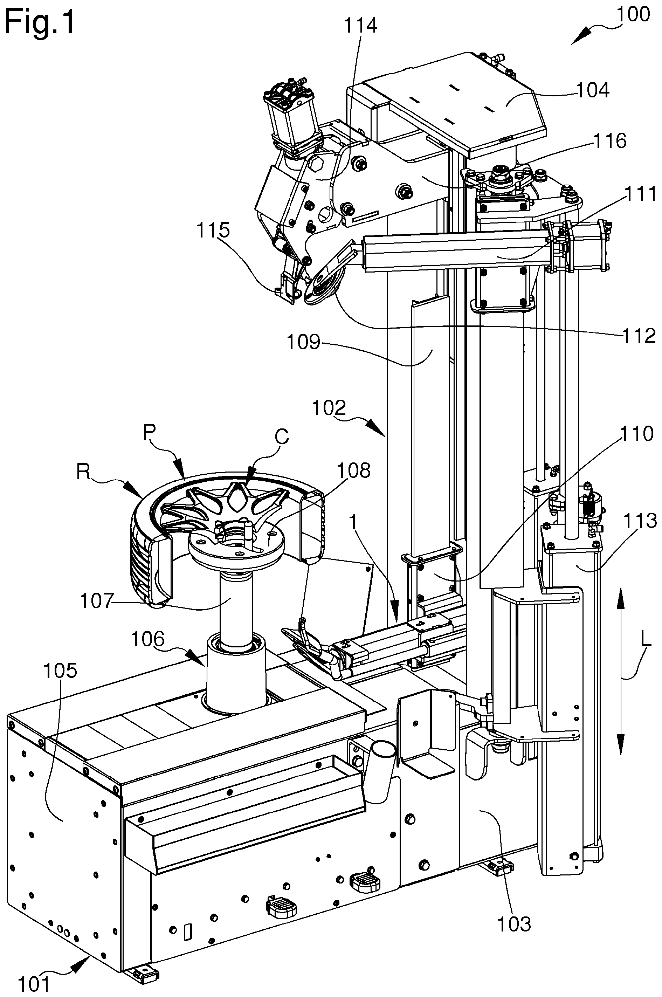

In Figure 1, the device 1 is applied to a tire changing machine 100, which is used to operate on a wheel R, provided with a rim C and with a tire P.

The rim C has a substantially cylindrical conformation and comprises, at its ends, two respective flange elements F which are substantially annular flaps on which the tire P abuts.

The tire P comprises two beads T, each of which can be juxtaposed to a respective flange element F.

The following disclosure will first cover the description of the tire changing machine 100 and then the detailed description of the device 1.

The tire changing machine 100 comprises at least one base frame 101 for the support onto the ground.

The base frame 101 comprises a post element 102 provided with a base portion 103, resting on the ground during the use of the tire changing machine 100, and with a top portion 104, opposite the base portion 103.

The base frame 101 comprises a bedplate 105 associated with the post element 102 where the base portion 103 is located and resting on the ground during the use of the tire changing machine 100.

The tire changing machine 100 comprises at least one supporting assembly 106 associated with the base frame 101 and adapted to support the rim C.

The rim C is placed on the supporting assembly 106 so that one of the flanges F faces downwards.

The supporting assembly 106 is associated with the bedplate 105 and comprises a spindle 107 which is operable in rotation around its own axis which, with particular reference to the embodiment shown in the figures, is substantially vertical.

The supporting assembly 106 comprises a clamping assembly 108 of the rim C associated with the spindle 107 and adapted to hold the rim C.

The device 1, with which the machine 100 is provided, is associated with base frame 101 in a sliding manner along a substantially vertical direction of work L. The tire changing machine 100 comprises movement means 109, 110 of the device 1 with respect to the base frame 101 along the direction of work L.

Usefully, the movement means 109, 110 comprise:
- at least one sliding track 109 associated with the base frame 101 and running longitudinally along the direction of work L;
- at least one carriage 110 associated with the sliding track 109 in a sliding manner along the direction of work L and connected to the device 1.

The sliding track 109 is associated with the post element 102.

As will be explained in detail later, the device 1 comprises a supporting arm 2 associated with the sliding carriage 110 so as to be arranged substantially horizontally and protruding towards the bedplate 105.

By operating the movement means 109, 110 it is possible to move the device 1 in a sliding manner along the direction of work L so as to move it close to and/or away from the bedplate 105.

In this way, when the rim C is placed on the bedplate 105, the vertical distance of the device 1 from the rim C can be varied according to the machining requirements.

Conveniently, the tire changing machine 100 comprises bead breaking means 111, 112 associated with the base frame 101 in a sliding manner along the direction of work L.

The bead breaking means 111, 112 comprise:
- at least one arm element 111, associated at one end with the post element 102 so that it runs in a substantially horizontal manner;
- at least one bead breaking body 112 associated with the free end of the arm element 111 and which, during the removal of the tire P from the rim C, is fitted between the bead T and the flange F to allow the relevant removal thereof.

When using the tire changing machine 100, the bead breaking body 112 operates on the flange F and on the bead T facing upwards.

The arm element 111 is associated with the post element 102 in a sliding manner along the direction of work L and can be moved alternately close to or away from the top portion 104.

The tire changing machine 100 comprises a movement assembly 113 associated with the post element 102 and with the bead breaking means 111, 112 and which moves the bead breaking means 111, 112 with respect to the base frame 101 in a sliding manner along the direction of work L.

This makes it possible to adjust the vertical distance of the bead breaking body 112 from the bedplate 105 and, when present, from the rim C, so as to facilitate the operation of the tire changing machine 100.

Advantageously, the tire changing machine 100 comprises an auxiliary fitting/removal tool 114, 115 of the tire P associated with the base frame 101 in a sliding manner along the direction of work L.

The auxiliary fitting/removal tool 114, 115 comprises:
- at least one supporting body 114, associated with the post element 102 in a sliding manner along the direction of work L; and
- at least one hook 115 associated with the supporting body 114 and adapted to fasten the bead T facing upwards so as to facilitate the fitting/removal of the tire P onto/from the rim C.

Conveniently, the tire changing machine 100 comprises a sliding assembly 116 associated with the post element 102 and with the auxiliary fitting/removal tool 114, 115 and which moves the auxiliary fitting/removal tool 114, 115 in a sliding manner with respect to the base frame 101 along the direction of work L. In this way, the vertical distance of the hook 115 from the bedplate 105 and, when present, from the tire P can be adjusted so as to facilitate the operation of the tire changing machine 100.

The device 1 provided with the tire changing machine 100 is used to fit/remove the tire P onto/from the rim C.

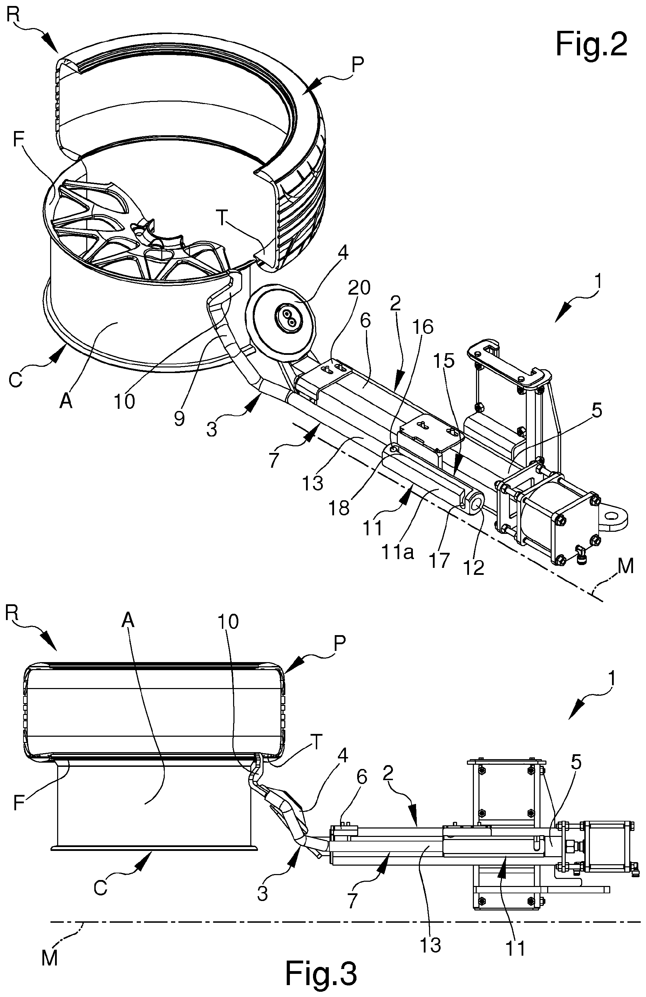

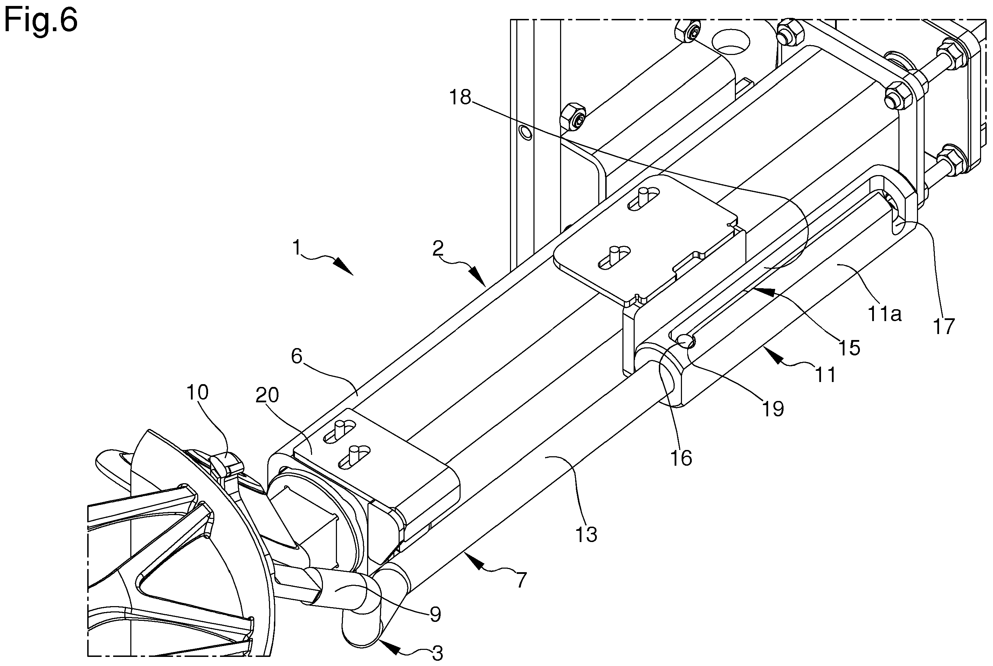

Figures 2-6 show the device 1, as an example only, during the fitting stage of the tire P onto the rim C.

This choice of application should not be considered limiting, since the device 1 can also be used during the removal phase of the tire P from the rim C.

The device 1 comprises:
- at least one supporting arm 2 associable with a tire changing machine;
- at least one fitting/removal tool 3 associated with the supporting arm 2 and adapted to interact with the tire P of the wheel R to fit/remove the tire P from/onto the rim C of the wheel R;
- at least one bead breaking tool 4 associated with the supporting arm 2 and adapted to interact with the tire P to separate at least one of the relevant beads T from the rim C.

Preferably, the supporting arm 2 has an elongated conformation and it comprises a first end 5, which is associated with the base frame 101, and a second end 6.

Precisely, as mentioned above, the supporting arm 2 is associated with the sliding carriage 110.

The fitting/removal tool 3 and the bead breaking tool 4 are locked together with the supporting arm 2 when moving the device 1 along the direction of work L.

The fitting/removal tool 3 comprises a tubular body 7 provided with a first extremal portion 8 and with a second extremal portion 9 provided with a hook-shaped element 10 adapted to interact with the tire P.

The tubular body 7 is associated with the supporting arm 2.

As can be seen in Figures 2 and 3, during the fitting phase of the tire P, the hook-shaped element 10 abuts on the rim C and positions itself between the flange F and the bead T facing upwards.

In this way, the hook-shaped element 10 can force the override of the flange F by the bead T, which is thus positioned within the channel A.

The bead breaking tool 4 comprises a bead breaking element having a substantially truncated cone conformation which, during the removal phase, is forcibly inserted between the bead T and the flange F so as to promote their mutual away movement.

As can be seen in Figures 2-6, the bead breaking tool 4, when fitting the tire P onto the rim C, pushes the bead T already present in the channel A so as to allow it to override the flange F facing downwards.

Preferably, the bead breaking tool 4 is associated with a longitudinal end of the supporting arm 2.

Precisely, the bead breaking tool 4 is associated with the second end 6.

According to the invention, the fitting/removal tool 3 is movable with respect to the supporting arm 2 between at least one configuration of work, wherein it is juxtaposed side by side with the bead breaking tool 4, and at least one home configuration, wherein it is moved away from the bead breaking tool 4.

Again, according to the invention, the fitting/removal tool 3 carries out a rotational movement around an axis of movement M and at least one shifting movement along the axis of movement M to displace from the configuration of work to the home configuration and vice versa.

Preferably, the axis of movement M runs substantially parallel to the longitudinal axis of the supporting arm 2.

When the device 1 is associated with the tire changing machine 100, the axis of movement M is substantially horizontal.

Conveniently, the fitting/removal tool 3 is arranged side by side with the bead breaking tool 4 in the configuration of work. The fitting/removal tool 3 can be arranged either to one side or the other with respect to

Precisely, when the fitting/removal tool 3 is placed in the position of work, the hook-shaped element 10 is juxtaposed side by side with the bead breaking tool 4.

Consequently, as is shown in Figures 2 and 3, it is useful to place the fitting/removal tool 3 in the position of work during the fitting of the tire P onto the rim C, wherein the hook-shaped element 10 faces the rim C.

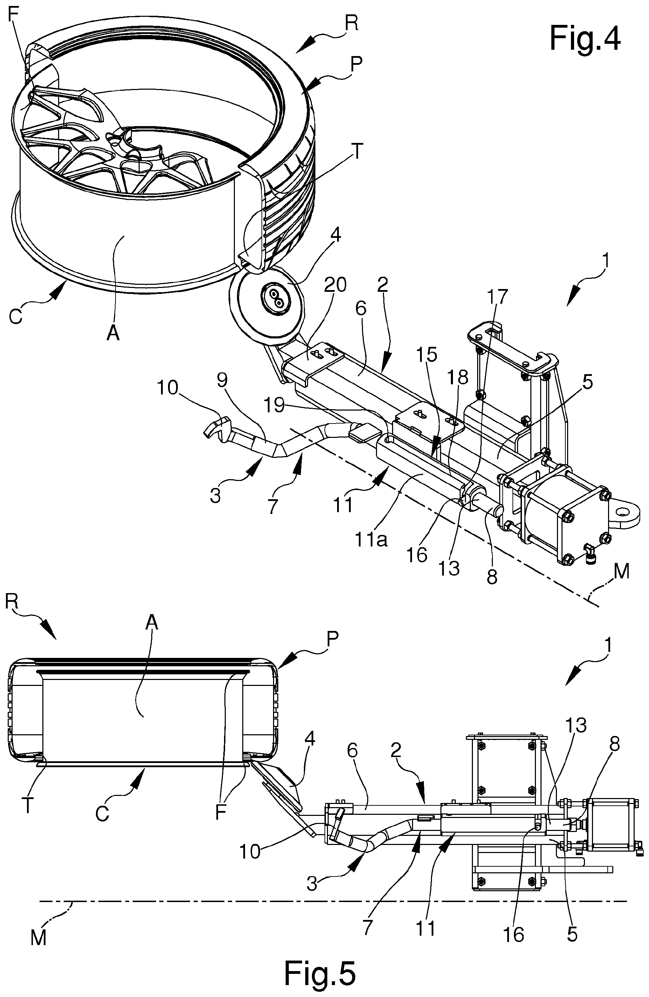

When the fitting/removal tool 3 is positioned in the home position, as visible from Figures 4 and 5, the hook-shaped element 10 is moved away from the bead breaking tool 4 and is not positioned in the area of work of the bead breaking tool 4 itself.

Therefore, during the fitting phase, it may be useful to position the fitting/removal tool 3 in the home position as soon as the bead T, on which it has already operated, comes to be in the channel A.

In this way, interference between the fitting/removal tool 3 and the bead breaking tool 4 can be reduced.

Again, when the bead T comes to be in channel A, the tire P comes close to the hook-shaped element 10, which is likely to damage it.

By placing the fitting/removal tool 3 in the home position, it is possible to move the hook-shaped element 10 away from the tire P, thus limiting the relevant damage.

Conveniently, the device 1 comprises guidance means **11** for guiding the displacement of the fitting/removal tool 3 from the configuration of work to the home configuration and vice versa.

Preferably, the guidance means **11** comprise a connecting element 11a locked together with the supporting arm 2.

The fitting/removal tool 3 is associated by shifting and in rotation with the connecting element 11a.

Conveniently, the connecting element 11a has at least one seat 12 with a circular cross-section and defining the axis of movement M.

The fitting/removal tool 3 has at least one cylindrical portion 13 coaxially fitted into the seat 12.

The cylindrical portion 13 is movable in rotation and by shifting with respect to the seat 12.

Preferably, the connecting element 11a has a substantially cylindrical shape and runs substantially parallel to the supporting arm 2.

Precisely, the connecting element 11a is substantially hollow and internally defines the seat 12.

The connecting element 11a is placed between the first end 5 and the second end 6 of the supporting arm 2.

The tubular body 7 comprises the cylindrical portion 13 which runs longitudinally along the axis of movement M and comprises the first extremal portion 8 at one end.

During the shifting of the fitting/removal tool 3 with respect to the supporting arm 2, the cylindrical portion 13 shifts within the seat 12.

When rotating the fitting/removal tool 3 with respect to the supporting arm 2, the cylindrical portion 13 rotates within the seat 12.

Usefully, the guidance means 11 comprise at least one slot 15 defined on the connecting element 11a and at least one pin 16 associated with the fitting/removal tool 3 and fitted in the slot 15 in a movable manner, the latter having at least one curvilinear stretch 17, defining the rotational movement, and at least one straight stretch 18, defining the shifting movement.

The straight stretch 18 runs substantially parallel to the axis of movement M, while the curvilinear stretch 17 runs transversely to the axis of movement M.

The curvilinear stretch 17 and the straight stretch 18 are made contiguous to each other.

The pin 16 is associated with the fitting/removal tool 3 at the first extremal portion 8.

In actual facts, the cylindrical portion 13 comprises the pin 16 at a relevant end. During the alternate movement of the fitting/removal tool 3 between the position of work and the home position, the pin 16 slides within the straight stretch 18, resulting in the shifting of the fitting/removal tool 3 along the axis of movement M, and rotates within the curvilinear stretch 17, thus causing the rotation of the fitting/removal tool 3 around the axis of movement M.

Preferably, the guidance means **11** are shaped so that the rotational movement and the shifting movement occur in succession to each other.

In other words, during the alternate movement of the fitting/removal tool 3 between the position of work and the home position, the fitting/removal tool 3 first carries out one of shifting or rotation with respect to the supporting arm 2 and then the other of shifting or rotation with respect to the supporting arm 2.

In the particular embodiment shown in the figures, the straight stretch 18 is made in the portion of the connecting element 11a facing the second end 6; while the curvilinear stretch 17 is made in the portion of the connecting element 11a facing the first end 5.

In this case, when the fitting/removal tool 3 switches from the configuration of work to the home configuration, the pin 16 first slides within the straight stretch 18 and then rotates within the curvilinear stretch 17, thus causing the fitting/removal tool 3 to first shift and then rotate with respect to the supporting arm 2.

To switch from the home configuration to the configuration of work, the pin 16 takes the reverse path to the one just described.

Alternative embodiments cannot however be ruled out wherein the slot 15 is shaped differently and, e.g., wherein the straight stretch 18 is made at the portion of the connecting element 11a facing the first end 5 while the curvilinear stretch 17 is made at the portion of the connecting element 11a facing the second end 6.

In this case, the fitting/removal tool 3, in order to switch from the configuration of work to the home configuration, first rotates with respect to the supporting arm 2 around the axis of movement M and then shifts with respect to the supporting arm 2 along the axis of movement M.

Usefully, the guidance means 11 comprise at least one clamping slot 19 adapted to prevent the movement of the fitting/removal tool 3 from the configuration of work to the home configuration.

The clamping slot 19 is defined by the connecting element 11a and is associated with the end of the straight stretch 18 facing the second end 6.

The straight stretch 18 and the clamping slot 19 are made contiguous to each other.

The pin 16, when the fitting/removal tool 3 is positioned in the configuration of work, can be made to come out of the straight stretch 18 and be placed in the clamping slot 19, so as to prevent the fitting/removal tool 3 from shifting with respect to the supporting arm 2.

Alternatively and/or in combination thereof, the guidance means 11 are shaped in such a way that the rotational movement and the shifting movement occur substantially at the same time with each other.

In this case, the slot 15 internally defines a substantially curvilinear path of movement wherein the pin 16 is moved by causing the fitting/removal tool 3 to carry out a rotation at the same time as a shifting with respect to the supporting arm 2.

In the particular embodiment shown in the figures, the alternate movement of the fitting/removal tool 3 between the configuration of work and the home configuration is carried out manually by an operator.

In alternative embodiments, not shown in the figures, the device 1 comprises activation means for activating the movement of the fitting/removal tool 3 between the configuration of work and the home configuration.

Conveniently, the device 1 comprises at least one abutment element 20 associated with the supporting arm 2 and adapted to interact with the fitting/removal tool 3, with the latter in the configuration of work, to limit the bending thereof as a result of the interaction with the tire P.

The abutment element 20 has a substantially plate-shaped conformation and is associated with the second end 6 so as to face the fitting/removal tool 3 when positioned in the work configuration.

When using the fitting/removal tool 3 on the rim C, depending on the way of rotation of the rim C, it may happen that the tubular body 7 is bent away from the supporting arm 2.

Precisely, the tubular body 7, in the case of high bending, goes to stop against the abutment element 20 which makes it possible to reduce the bending of the tubular body 7.

The operation of the tire changing machine 100 comprising the device 1 according to the invention is as follows.

For explanatory simplicity and consistency with what is shown in the figures, only the phase of fitting the tire P onto the rim C is described.

First of all, the rim C is placed on the supporting assembly 106 so that one of the flanges F faces downwards.

The rim C is attached to the supporting assembly 106 thanks to the operation of the clamping assembly 108.

Next, as visible in Figures 2 and 3, the fitting/removal tool 3 is placed in the first configuration of work, and, by operating the movement means 109, 110, the fitting/removal tool 3 is moved along the direction of work L so that the hook-shaped element 10 abuts against the flange F facing upwards.

At this point, the tire P is placed on the rim C so that the hook-shaped element 10 comes to be positioned between the flange F and the bead T.

By applying an appropriate force on the bead T, the latter overrides the flange F at the point where the hook-shaped element 10 is fitted, and thanks to setting the rim C in rotation as a result of the activation of the spindle 107, the entire bead T enters the channel A.

At this point the fitting/removal tool 3 is placed in the home position by making the pin 16 slide into the straight stretch 18 and then into the curvilinear stretch 17.

In this way, the bead breaking tool 4 can operate the bead T present in the channel A in such a way that it overrides the other flange F, that is, the one facing downwards.

Next, the bead breaking means 111, 112 operate on the bead T facing upwards so that it enters the inside of the channel A.

It has in practice been ascertained that the described invention achieves the intended objects.

The special arrangement of moving the fitting/removal tool alternately between a work configuration, wherein it is moved close to the bead breaking tool, and a home configuration, wherein it is moved away from the bead breaking tool, allows for improved operability of an operator who is using the device.

This makes it possible to make the fitting/removal tool leave the working area of the bead breaking tool when the latter is to operate and when the fitting/removal tool is no longer needed.

In addition, the device according to the invention makes it possible to limit the damage to the tire and/or to the rim on which one is operating which can occur as a result of the contact with the working tools.

Particularly, the device according to the invention allows the hook-shaped element to be moved away from the rim, thus limiting the damage to the rim and/or to the tire.

## Claims

1. Device (1) for fitting/removing tires comprising:
- at least one supporting arm (2) associable with a tire changing machine (100);
- at least one fitting/removal tool (3) associated with said supporting arm (2) and adapted to interact with the tire (P) of a wheel (R) to fit/remove said tire (P) onto/from the rim (C) of said wheel (R);
- at least one bead breaking tool (4) associated with said supporting arm (2) and adapted to interact with the tire (P) to separate at least one of the relevant beads (T) from the rim (C);
wherein said fitting/removal tool (3) is movable with respect to said supporting arm (2) between at least one configuration of work, wherein it is side-by-side with said bead breaking tool (4), and at least one home configuration, wherein it is moved away from said bead breaking tool (4), and **characterized by** the fact that said fitting/removal tool (3) performs a rotational movement around an axis of movement (M) and at least one shifting movement along said axis of movement (M) to displace from said configuration of work to said home configuration and vice versa.

2. Device according to claim 1, **characterized by** the fact that it comprises guidance means (11) for guiding the displacement of said fitting/removal tool (3) from the configuration of work to the home configuration and vice versa.

3. Device according to claim 2, **characterized by** the fact that said guidance means (11) comprise a connecting element (11a) locked together with said supporting arm (2) and by the fact that said fitting/removal tool (3) is associated by shifting and in rotation with said connecting element (11a).

4. Device according to claim 2 or 3, **characterized by** the fact that said guidance means (11) are shaped so that said rotational movement and said shifting movement occur in succession to each other.

5. Device according to claim 2 or 3, **characterized by** the fact that said guidance means (11) are shaped in such a way that said rotational movement and said shifting movement occur substantially at the same time with each other.

6. Device according to one or more of the preceding claims, **characterized by** the fact that said connecting element (11a) has at least one seat (12) with a circular cross-section and defining said axis of movement (M) and by the fact that said fitting/removal tool (3) has at least one cylindrical portion (13) coaxially inserted into said seat (12), said cylindrical portion (13) being movable in rotation and by shifting with respect to said seat (12).

7. Device according to claim 6, **characterized by** the fact that said guidance means (11) comprise at least one slot (15) defined on said connecting element (11a) and at least one pin (16) associated with said fitting/removal tool (3) and inserted in said slot (15) in a movable manner, the latter having at least one curvilinear stretch (17), defining said rotational movement, and at least one straight stretch (18), defining said shifting movement.

8. Device according to one or more of the preceding claims, **characterized by** the fact that it comprises activation means for activating the movement of said fitting/removal tool (3) between said configuration of work and said home configuration.

9. Device according to one or more of the preceding claims, **characterized by** the fact that said supporting arm (2) has an elongated shape and by the fact that said axis of movement (M) runs substantially parallel to the longitudinal axis of said supporting arm (2).

10. Device according to one or more of the preceding claims, **characterized by** the fact that said bead breaking tool (4) is associated with a longitudinal end of said supporting arm (2).

11. Device according to one or more of the preceding claims, **characterized by** the fact that said fitting/removal tool (3) is arranged alongside said bead breaking tool (4) in said configuration of work.

12. Device (1) according to one or more of the preceding claims, **characterized by** the fact that it comprises at least one abutment element (20) associated with said supporting arm (2) and adapted to interact with said fitting/removal tool (3), with the latter in a configuration of work, to limit the bending thereof as a result of the interaction with the tire (P).

13. Tire changing machine (100), comprising:
- at least one base frame (101) for the support onto the ground;
- at least one supporting assembly (106) associated with said base frame (101), adapted to hold said rim (C) and adapted to move it in rotation around a relevant axis;
- at least one device (1) for fitting/removing tires according to one or more of the preceding claims, associated with said base frame (101) in a sliding manner along a substantially vertical direction of work (L).

## Patentansprüche

1. Vorrichtung (1) zum Montieren/Demontieren von Reifen, umfassend:
- mindestens einen Tragarm (2), der mit einer Reifenwechselmaschine (100) verbunden werden kann;
- mindestens ein Montage-/Demontagewerkzeug (3), das mit dem Tragarm (2) verbunden ist und dazu ausgebildet ist, mit dem Reifen (P) eines Rades (R) zusammenzuwirken, um den Reifen (P) auf/von der Felge (C) des Rades (R) zu montieren/demontieren;
- mindestens ein Wulstabdrückwerkzeug (4), das mit dem Tragarm (2) verbunden und dazu ausgebildet ist, mit dem Reifen (P) zusammenzuwirken, um mindestens einen der betreffenden Wülste (T) von der Felge (C) zu trennen;
wobei das Montage-/Demontagewerkzeug (3) in Bezug auf den Tragarm (2) zwischen mindestens einer Arbeitskonfiguration, in der es sich Seite an Seite mit dem Wulstabdrückwerkzeug (4) befindet, und mindestens einer Ausgangskonfiguration, in der es von dem Wulstabdrückwerkzeug (4) wegbewegt ist, beweglich ist und **dadurch gekennzeichnet, dass** das Montage-/Demontagewerkzeug (3) eine Drehbewegung um eine Bewegungsachse (M) und mindestens eine Verschiebebewegung entlang dieser Bewegungsachse (M) ausführt, um sich von der Arbeitskonfiguration zur Ausgangskonfiguration und umgekehrt zu verstellen.

2. Vorrichtung nach Anspruch 1, **dadurch gekennzeichnet, dass** sie Führungsmittel (11) zur Führung der Verstellung des Montage-/Demontagewerkzeugs (3) von der Arbeitskonfiguration in die Ausgangskonfiguration und umgekehrt umfasst.

3. Vorrichtung nach Anspruch 2, **dadurch gekennzeichnet, dass** die Führungsmittel (11) ein Verbindungselement (11a) umfassen, das mit dem Tragarm (2) verriegelt ist, und dass das Montage-/Demontagewerkzeug (3) durch Verschieben und Drehen mit dem Verbindungselement (11a) verbunden ist.

4. Vorrichtung nach Anspruch 2 oder 3, **dadurch gekennzeichnet, dass** die Führungsmittel (11) so geformt sind, dass die Drehbewegung und die Verschiebebewegung nacheinander erfolgen.

5. Vorrichtung nach Anspruch 2 oder 3, **dadurch gekennzeichnet, dass** die Führungsmittel (11) so geformt sind, dass die Drehbewegung und die Verschiebebewegung im Wesentlichen gleichzeitig miteinander erfolgen.

6. Vorrichtung nach einem oder mehreren der vorhergehenden Ansprüche, **dadurch gekennzeichnet, dass** das Verbindungselement (11a) mindestens einen Sitz (12) mit kreisförmigem Querschnitt aufweist, der die Bewegungsachse (M) definiert, und dass das Montage-/Demontagewerkzeug (3) mindestens einen zylindrischen Abschnitt (13) aufweist, der koaxial in den Sitz (12) eingesetzt ist, wobei der zylindrische Abschnitt (13) drehbar und durch Verschieben gegenüber dem Sitz (12) beweglich ist.

7. Vorrichtung nach Anspruch 6, **dadurch gekennzeichnet, dass** die Führungsmittel (11) mindestens einen auf dem Verbindungselement (11a) ausgebildeten Schlitz (15) und mindestens einen dem Montage-/Demontagewerkzeug (3) zugeordneten und in den Schlitz (15) beweglich eingesetzten Stift (16) umfassen, wobei letzterer mindestens eine gekrümmte Ausdehnung (17), die die Drehbewegung definiert, und mindestens eine gerade Ausdehnung (18), die die Verschiebebewegung definiert, aufweist.

8. Vorrichtung nach einem oder mehreren der vorhergehenden Ansprüche, **dadurch gekennzeichnet, dass** sie Aktivierungsmittel zum Aktivieren der Bewegung des Montage-/Demontagewerkzeugs (3) zwischen der Arbeitskonfiguration und der Ausgangskonfiguration umfasst.

9. Vorrichtung nach einem oder mehreren der vorhergehenden Ansprüche, **dadurch gekennzeichnet, dass** der Tragarm (2) eine längliche Form aufweist und dass die Bewegungsachse (M) im Wesentlichen parallel zur Längsachse des Tragarms (2) verläuft.

10. Vorrichtung nach einem oder mehreren der vorhergehenden Ansprüche, **dadurch gekennzeichnet, dass** das Wulstabdrückwerkzeug (4) einem Längsende des Tragarms (2) zugeordnet ist.

11. Vorrichtung nach einem oder mehreren der vorhergehenden Ansprüche, **dadurch gekennzeichnet, dass** das Montage-/Demontagewerkzeug (3) in der Arbeitskonfiguration neben dem Wulstabdrückwerkzeug (4) angeordnet ist.

12. Vorrichtung (1) nach einem oder mehreren der vorhergehenden Ansprüche, **dadurch gekennzeichnet, dass** sie mindestens ein Anlageelement (20) umfasst, das mit dem Tragarm (2) verbunden ist und dazu ausgebildet ist, mit dem Montage-/Demontagewerkzeug (3) zusammenzuwirken, wobei sich letzteres in einer Arbeitskonfiguration befindet, um dessen Biegung als Ergebnis der Wechselwirkung mit dem Reifen (P) zu begrenzen.

13. Reifenwechselmaschine (100), umfassend:
- mindestens einen Grundrahmen (101) für die Abstützung auf dem Boden;
- mindestens eine Stützbaugruppe (106), die mit dem Grundrahmen (101) verbunden ist und dazu ausgebildet ist, die Felge (C) zu halten und sie in Rotation um eine relevante Achse zu bewegen;
- mindestens eine Vorrichtung (1) zum Montieren/Demontieren von Reifen nach einem oder mehreren der vorhergehenden Ansprüche, die mit dem Grundrahmen (101) entlang einer im Wesentlichen vertikalen Arbeitsrichtung (L) verschiebbar verbunden ist.

## Revendications

1. - Dispositif (1) de montage/démontage de pneus comprenant :
- au moins un bras de support (2) apte à être associé à une machine à changer un pneu (100) ;
- au moins un outil de montage/démontage (3) associé audit bras de support (2) et apte à interagir avec le pneu (P) d'une roue (R) pour le montage/démontage dudit pneu (P) sur/à partir de la jante (C) de ladite roue (R) ;
- au moins un outil décolleur de talon (4) associé audit bras de support (2) et apte à interagir avec le pneu (P) pour séparer au moins l'un des talons pertinents (T) vis-à-vis de la jante (C) ;
ledit outil de montage/démontage (3) étant mobile par rapport audit bras de support (2) entre au moins une configuration de travail, dans laquelle il se trouve côte à côte avec ledit outil décolleur de talon (4), et au moins une configuration de repos, dans laquelle il est éloigné dudit outil décolleur de talon (4), et **caractérisé par le fait que** ledit outil de montage/démontage (3) effectue un mouvement de rotation autour d'un axe de mouvement (M) et au moins un mouvement de décalage le long dudit axe de mouvement (M) pour se déplacer de ladite configuration de travail à ladite configuration de repos et inversement.

2. - Dispositif selon la revendication 1, **caractérisé par le fait qu'**il comprend des moyens de guidage (11) pour guider le déplacement dudit outil de montage/démontage (3) de la configuration de travail à la configuration de repos et inversement.

3. - Dispositif selon la revendication 2, **caractérisé par le fait que** lesdits moyens de guidage (11) comprennent un élément de liaison (11a) verrouillé conjointement avec ledit bras de support (2) et **par le fait que** ledit outil de montage/démontage (3) est associé par décalage et en rotation avec ledit élément de liaison (11a).

4. - Dispositif selon la revendication 2 ou 3, **caractérisé par le fait que** lesdits moyens de guidage (11) sont façonnés de telle sorte que ledit mouvement de rotation et ledit mouvement de décalage aient lieu l'un après l'autre.

5. - Dispositif selon la revendication 2 ou 3, **caractérisé par le fait que** lesdits moyens de guidage (11) sont façonnés de telle sorte que ledit mouvement de rotation et ledit mouvement de décalage aient lieu sensiblement en même temps.

6. - Dispositif selon l'une ou plusieurs des revendications précédentes, **caractérisé par le fait que** ledit élément de liaison (11a) comporte au moins un siège (12) de section transversale circulaire et définissant ledit axe de mouvement (M) et **par le fait que** ledit outil de montage/démontage (3) a au moins une partie cylindrique (13) introduite coaxialement dans ledit siège (12), ladite partie cylindrique (13) étant mobile en rotation et par décalage par rapport audit siège (12).

7. - Dispositif selon la revendication 6, **caractérisé par le fait que** lesdits moyens de guidage (11) comprennent au moins une fente (15) définie sur ledit élément de liaison (11a) et au moins une broche (16) associée audit outil de montage/démontage (3) et introduite dans ladite fente (15) d'une manière mobile, cette dernière présentant au moins une étendue curviligne (17), définissant ledit mouvement de rotation, et au moins une étendue rectiligne (18), définissant ledit mouvement de décalage.

8. - Dispositif selon l'une ou plusieurs des revendications précédentes, **caractérisé par le fait qu'**il comprend des moyens d'activation pour activer le mouvement dudit outil de montage/démontage (3) entre ladite configuration de travail et ladite configuration de repos.

9. - Dispositif selon l'une ou plusieurs des revendications précédentes, **caractérisé par le fait que** ledit bras de support (2) a une forme allongée et **par le fait que** ledit axe de mouvement (M) s'étend sensiblement parallèlement à l'axe longitudinal dudit bras de support (2).

10. - Dispositif selon l'une ou plusieurs des revendications précédentes, **caractérisé par le fait que** ledit outil décolleur de talon (4) est associé à une extrémité longitudinale dudit bras de support (2).

11. - Dispositif selon l'une ou plusieurs des revendications précédentes, **caractérisé par le fait que** ledit outil de montage/démontage (3) est disposé à côté dudit outil décolleur de talon (4) dans ladite configuration de travail.

12. - Dispositif (1) selon l'une ou plusieurs des revendications précédentes, **caractérisé par le fait qu'**il comprend au moins un élément de butée (20) associé audit bras de support (2) et apte à interagir avec ledit outil de montage/démontage (3), avec ce dernier dans une configuration de travail, pour en limiter la flexion du fait de l'interaction avec le pneu (P).

13. - Machine à changer un pneu (100), comprenant :
- au moins un cadre de base (101) pour le support au sol ;
- au moins un ensemble de support (106) associé audit cadre de base (101), apte à maintenir ladite jante (C) et apte à la déplacer en rotation autour d'un axe pertinent ;
- au moins un dispositif (1) de montage/démontage de pneus selon l'une ou plusieurs des revendications précédentes, associé audit cadre de base (101) d'une manière coulissante le long d'une direction de travail (L) sensiblement verticale.
